# EUROPEAN PATENT APPLICATION

(11) **EP 0 538 062 A2**
(43) Date of publication of application: **21.04.1993**
(21) Application number: 92309484.1
(22) Date of filing: 16.10.1992
(51) Int. Cl.: C07F 7/21, C07F 7/08

(54) **Fluorine-containing cyclotrisiloxane and process for preparing the same**

(30) Priority: 17.10.1991 JP 298322/91
(71) Applicant: Shin-Etsu Chemical Co., Ltd., Chiyoda-ku Tokyo 100 (JP)
(72) Inventor: Takago, Toshio, Annaka-shi, Gunma-ken (JP); Kishita, Hirofumi, Annaka-shi, Gunma-ken (JP); Sato, Shinichi, Annaka-shi, Gunma-ken (JP); Kinami, Hitoshi, Annaka-shi, Gunma-ken (JP); Yamaguchi, Kouichi, Takasaki-shi, Gunma-ken (JP)
(74) Representative: Votier, Sidney David

(57) **Abstract**

A fluorine-containing cyclotrisiloxane having the following general formula: 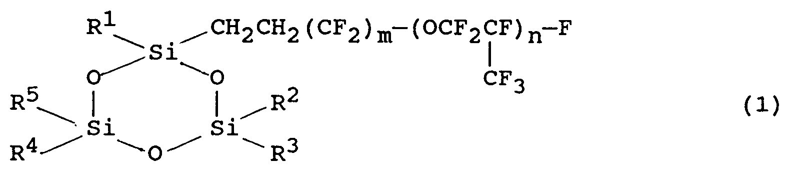
wherein R¹ to R⁵ are each an alkyl group of from 1 to 6 carbon atoms, m is an integer from 2 to 8, and n is an integer from 1 to 7. The compound is of use as a material for preparation or modification of various silicone compounds, and also as a surface-treating agent for silica, an adhesion improver for resists, and a water- or oil-repellency agent.

## Description

### BACKGROUND OF THE INVENTION

### 1. Field of the Invention

The present invention relates to a novel fluorine- containing cyclotrisiloxane useful as a material for syntheses of various silicone compounds, and to a process for preparing the same.

### 2. Description of the Prior Art

Silicone oils and elastomers have been used for diverse applications, and further improvement is required in properties of silicone oils and elastomers, such as heat resistance, chemical resistance, weatherability, water repellency, oil repellency, mold release property, etc. according to the intended use of the oils and elastomers.

Heretofore, it has been known that fluorine-containing cyclotrisiloxanes are effective in improving the properties mentioned above. Therefore, fluorine-containing cyclotrisiloxanes have been used as a starting material in synthesizing a variety of silicone polymers such as silicone oils and elastomers.

However, the improvements of the aforesaid properties by use of known fluorine-containing cyclotrisiloxanes are still unsatisfactory.

### SUMMARY OF THE INVENTION

It is accordingly an object of the present invention to provide a novel fluorine-containing cyclotrisiloxane which is of use as a material for syntheses of silicone polymers excellent in such properties as heat resistance, chemical resistance, weatherability, water repellency, oil repellency, mold release property, etc., and a process for preparation of the same.

According to the present invention, there is provided a fluorine-containing cyclotrisiloxane having the following general formula (1): 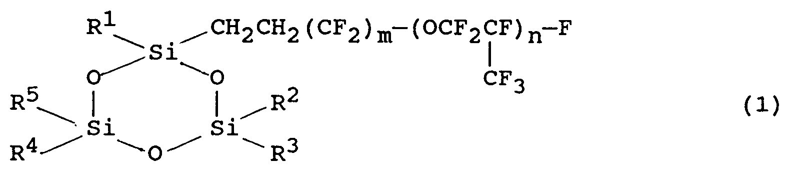
wherein R¹, R², R³, R⁴ and R⁵ may be the same or different from each other and are each an alkyl group of from 1 to 6 carbon atoms, m is an integer from 2 to 8, and n is an integer from 1 to 7.

According to the present invention, there is also provided a process for preparing the fluorine-containing cyclotrisiloxane having the above general formula (1), the process comprising reacting a disiloxanediol having the following general formula (2): 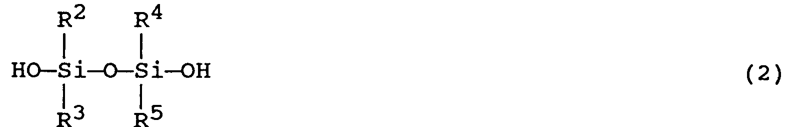
wherein R² to R⁵ are the same as defined above, with a fluorine-containing organohalosilane having the following general formula (3): 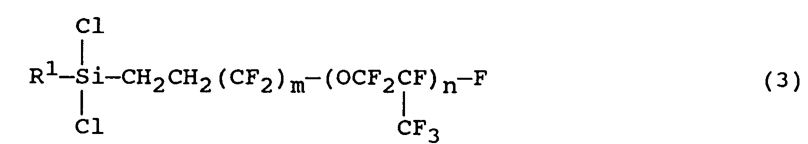
wherein R¹, m and n are the same as defined above.

### BRIEF DESCRIPTION OF THE DRAWINGS

Figure 1 is a diagram showing an IR spectrum of a fluorine-containing organohalosilane synthesized in Example 1 described below;
Figure 2 is a diagram showing an IR spectrum of a fluorine-containing cyclotrisiloxane according to the present invention, synthesized in Example 1 by use of the above fluorine-containing organohalosilane; and
Figure 3 is a diagram showing an IR spectrum of a fluorine-containing cyclotrisiloxane according to the present invention, synthesized in Example 2 described below.

### DETAILED DESCRIPTION OF THE PREFERRED EMBODIMENTS

### Fluorine-containing cyclotrisiloxane

In the above general formula (1) representing the fluorine-containing cyclotrisiloxane of the present invention, R¹, R², R³, R⁴ and R⁵ may be the same or different from each other and are each an alkyl group of from 1 to 6 carbon atoms. The alkyl groups may be linear or branched, and include, for example, methyl, ethyl, propyl, isopropyl, butyl, pentyl and hexyl groups. As has been described above, m is an integer from 2 to 8, and n is an integer from 1 to 7.

Typical examples of the fluorine-containing cyclotrisiloxane according to the present invention include the following compounds: 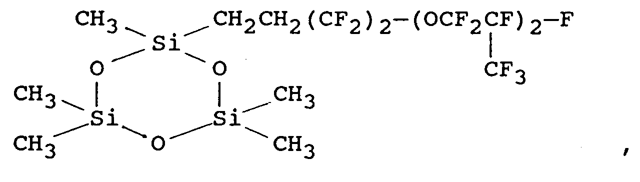
and

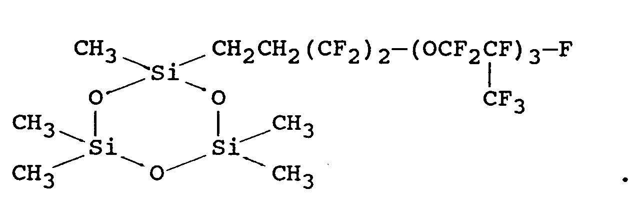

The fluorine-containing cyclotrisiloxane according to the invention readily undergoes ring-opening polymerization in the presence of an alkaline catalyst such as KOH, (n-C₄H₉)₄POH, or the like, or an acid catalyst such as H₂SO₄, CF₃SO₃H, or the like, to form a linear siloxane polymer. The fluorine-containing cyclotrisiloxane is capable of being brought to an equilibration reaction in the same manner as well known for hexamethylcyclotrisiloxane, and is applicable as a material for diverse silicone oils and silicone rubbers. Because the fluorine-containing cyclotrisiloxane has a large number of fluorine atoms, the silicone polymers obtained in the manner as above-mentioned each contain a large number of fluorine atoms introduced thereinto. Consequently, the silicone polymers are excellent in such properties as heat resistance, chemical resistance, weatherability, water repellency, oil repellency, mold release property, etc. The highness of these properties is controllable by selecting the size of the fluorine-containing group (the number of fluorine atoms) possessed by the fluorine-containing cyclotrisiloxane used. Furthermore, the'fluorine-containing cyclotrisiloxane of the present invention is applicable to diverse uses, such as a surface-treating agent for silicas employed as filler in organic resins and silicone rubbers, an adhesion improver for resists or the like in production steps of semiconductor devices, a water- or oil-repellency agent for lens and glass surfaces, a material for synthesis or modification of silicone compounds, and so on.

### Preparation process

The fluorine-containing cyclotrisiloxane of the present invention as above is prepared by reacting a disiloxanediol having the general formula (2): 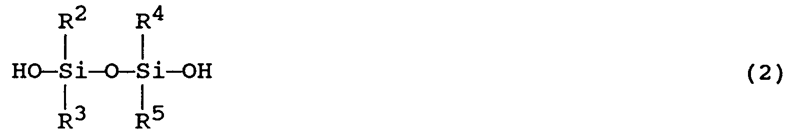
wherein R² to R⁴ are the same as defined above, with a fluorine-containing organohalosilane having the general formula (3): 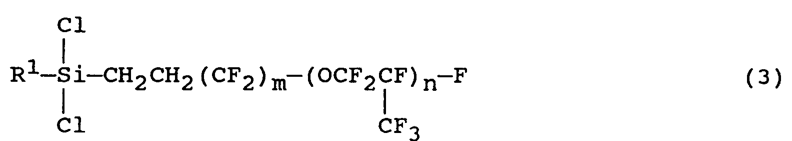
wherein R¹, m and n are the same as defined above.

This reaction is generally carried out in the presence of a catalyst. The catalysts usable for the reaction include, for example, amine compounds, preferably secondary amines such as diethylamine, and the like, and tertiary amines such as triethylamine, pyridine, diethylaniline, and the like. Such catalysts are used in an amount of from 1 to 6 mols, preferably from 2 to 3 mols, per 1 mol of the fluorine-containing organohalosilane of the general formula (3).

The reaction is carried out at a temperature which is suitably controlled according to such conditions as the reactivity between the disiloxanediol of the general formula (2) and the fluorine-containing organohalosilane of the general formula (3), the kind of the catalyst used, and so on. The reaction temperature is preferably from 0 to 100°C, more preferably from 30 to 700°C. The reaction may ordinarily be carried out for a period of from about 1 to about 10 hours.

The above reaction is carried out, for example, by preliminarily dissolving the disiloxanediol of the general formula (2) and the fluorine-containing organohalosilane of the general formula (3) separately in different solvents, then adding simultaneously the disiloxanediol solution and the fluorine-containing organohalosilane solution to a separately prepared solution of the catalyst, and stirring the resulting admixture in the above-described temperature range.

The solvent for the disiloxanediol is preferably a polar solvent, for example, methyl ethyl ketone, acetone, ethyl acetate, or the like. On the other hand, the solvent for the fluorine-containing organohalosilane is preferably a fluorine-containing solvent, for example, xylene hexafluoride, perfluorooctane, 1,1,2-trichlorotrifluoroethane , or the like. The solvent for the catalyst includes, for example, methyl ethyl ketone, ethyl acetate, toluene, xylene hexafluoride, perfluorooctane, and the like, which may be used either singly or in combination of two or more.

The fluorine-containing organohalosilane of the general formula (3) used in the process for preparing the fluorine-containing cyclotrisiloxane as above can be produced, for example, as follows.

First, hexafluoropropylene oxide (HFPO) is oligomerized by blowing it to an alkali metal fluoride such as cesium fluoride, potassium fluoride, or the like in an aprotic organic solvent such as diglyme, tetraglyme, or the like at a low temperature, to form an HFPO oligomer acid fluoride (a) having the following formula: 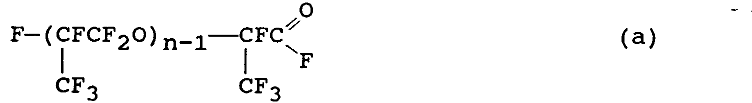
wherein n is the same as defined above.

The fluoride (a) is reacted with tetrafluoroethylene and iodine (iodo-etherification reaction) in an aprotic organic solvent in the presence of an alkali metal fluoride, to form a perfluoroether iodide (b). The iodo-etherification reaction is formulated as follows:

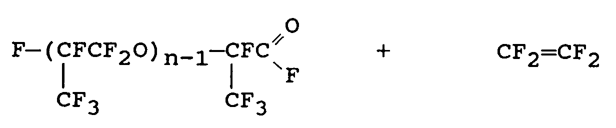

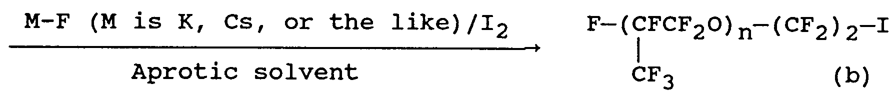

The perfluoroether iodide (b) thus obtained is then brought to an addition reaction by blowing ethylene into the iodide (b) in the presence of a radical addition catalyst, for example, an azo compound such as azobisisobutyronitrile or a peroxide such as di-t-butyl peroxide, to obtain a fluorine-containing alkyl ether ethyl iodide (c). The addition reaction is formulated as follows:

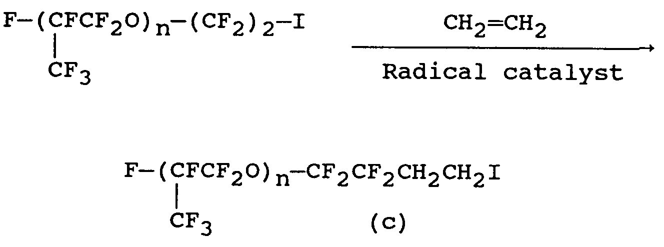

The fluorine-containing alkyl ether ethyl iodide (c) thus obtained is then added dropwise to an a-alcoholic solvent, such as methanol, containing an alkali metal hydroxide such as potassium hydroxide, sodium hydroxide, or the like, to form a fluorine-containing olefin (d) according to the following reaction formula:

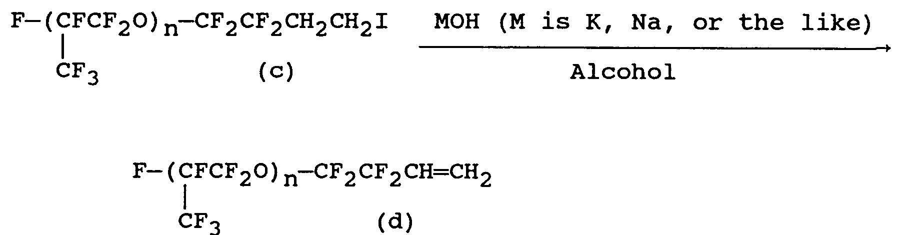

The procedure for obtaining a fluorine-containing olefin in this manner is known in the art.

The fluorine-containing olefin (d) thus obtained is reacted with a dichlorosilane (e), either in a solvent such as toluene, xylene, or the like or without solvent, in the presence of a platinum group metal catalyst, to form a fluorine-containing organohalosilane having the above general formula (3) wherein m is 2. The reaction is formulated as follows:

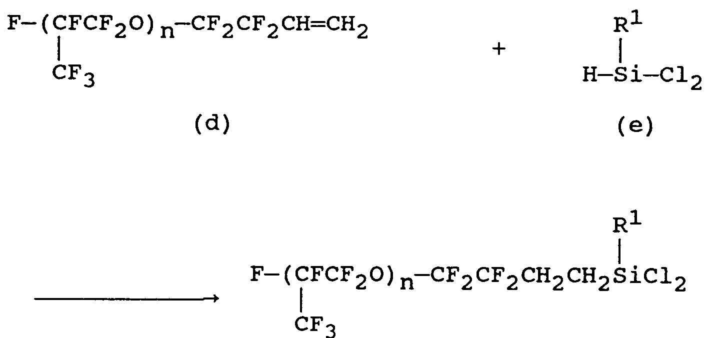

In this reaction, the dichlorosilane (e) is preferably used in an amount of from 1 to 2 mols, more preferably from 1.1 to 1.3 mols, per mol of the fluorine-containing olefin (d). The platinum group metal catalyst includes, for example, platinum catalysts, rhodium catalysts, and the like, of which preferred are platinum catalysts. Such platinum catalysts include, for example, the particulate metallic platinum catalyst described in U.S. Patent No. 2,970,150; the chloroplatinic acid catalyst described in U.S. Patent No. 2,823,218; the platinum-hydrocarbon complex compound described in U.S. Patent Nos. 3,159,601 and 3,159,662; the chloroplatinic acid-olefin complex compound described in U.S. Patent No. 3,516,946; the platinum-vinylsiloxane complex compound described in U.S. Patent Nos. 3,775,452 and 3,814,780; and so on. The platinum catalyst may be used in a catalytic amount. For example, the platinum catalyst is preferably used in an amount of from 1 x 10⁻⁶ to 1 x 10⁻³ mols (in terms of platinum), more preferably from 1 x 10⁻⁵ to 1 x 10⁻⁴ mols (in terms of platinum), per mol of the fluorine-containing olefin (d). The reaction conditions can be controlled suitably according to the reactivity between the fluorine-containing olefin (d) and the dichlorosilane (e), the kind of the platinum group metal catalyst used, and so on. Normally, the reaction temperature is preferably from 50 to 150°C, more preferably from 70 to 110°C, and the reaction duration is preferably from about 1 to about 100 hours, more preferably from about 5 to about 20 hours.

The preparation of the fluorine-containing organohalosilane as above has been described with reference to the case of m = 2 in the general formula (3). In the cases where m in the general formula (3) is from 3 to 8, the relevant fluorine-containing organohalosilanes can be prepared by using respectively suitable perfluoroalkenes in place of tetrafluoroethylene in the above-described iodo-etherification reaction.

### EXAMPLES

### Example 1

(1) A 350-ml autoclave was charged with 28 g of dichloromethylsilane, 97 g of a fluorine-containing olefin having the following formula (5): 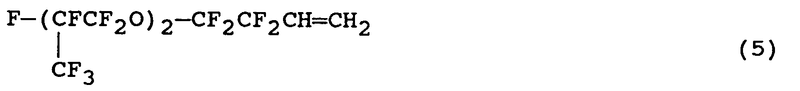 and 0.04 g of a platinum catalyst.
Then, the internal temperature of the autoclave was maintained at 120°C for 20 hours, to obtain a reaction mixture. The reaction mixture thus obtained was distilled, to give a distillate with a boiling point of 81°C (10 mmHg) in an amount of 79.5 g (Yield: 67%).
In order to determine the molecular structure of the distillate obtained, the distillate was subjected to elemental analysis as well as IR and ¹H-NMR spectroscopic analyses. The results are given below.

| Elemental analysis: | | | | |
|---|---|---|---|---|
| | C | H | Si | F |
| Calculated : | 22.27 | 1.19 | 4.74 | 54.45 |
| Found : | 22.31 | 1.21 | 4.69 | 54.18 |

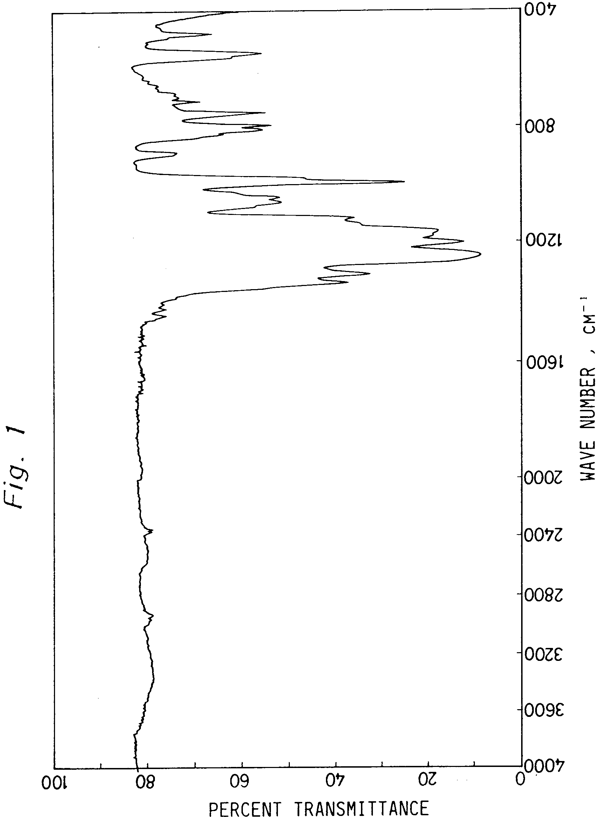

- IR spectrum: : Shown in Figure 1.
- C-H: : 2950 cm⁻¹
- C-F: : 1100-1340 cm⁻¹

¹H-NMR spectrum: in CCl₄, internal standard CHCl₃

| | δ (ppm) |
|---|---|
| (s, 3H, Si-CH₃) | 0.9 |
| (m, 2H, Si-CH₂-C) | 1.1-1.7 |
| (m, 2H, Si-C-CH₂-C) | 2.2-2.8 |

From these analytical results, the distillate obtained was ascertained to be a fluorine-containing organohalosilane having the following chemical formula (6): 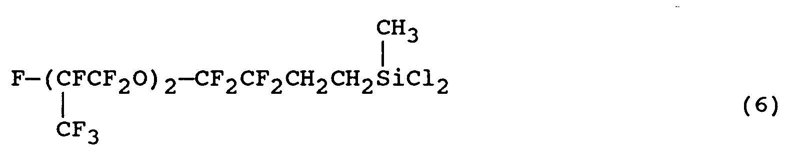
(2) Next, a 2-liter four-necked flask was charged with 600 ml of m-xylene hexafluoride, into which 44 g of triethylamine was dissolved. The flask was equipped with two 500-ml dropping funnels. One of the dropping funnels was charged with a solution prepared by dissolving 198 g of the fluorine-containing organohalosilane of the above formula (6) in 150 ml of m-xylene hexafluoride. The other dropping funnel was charged with a solution obtained by dissolving 55 g of a disiloxanediol having the following chemical formula (7): 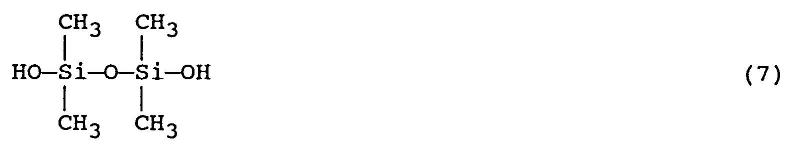 in 150 ml of methyl ethyl ketone.
After the triethylamine solution in the flask was heated to 50°C, the fluorine-containing organohalosilane solution and the disiloxanediol solution were added dropwise from the dropping funnels to the triethylamine solution at substantially equal rates of about 1 ml/min. After the dropping was over, the resulting reaction mixture was stirred for 30 minutes, and then washed with water to remove by-produced triethylamine hydrochloride. After the washing, the organic layer was separated from the rest and distilled, to give 179 g of a distillate at 81°C and 2 mmHg (Yield: 79%).
The distillate thus obtained was subjected to elemental analysis as well as infrared absorption and NMR spectroscopic analyses. The results are given below.

| Elemental analysis: | | | | |
|---|---|---|---|---|
| | C | H | Si | F |
| Calcd. for C₁₅H₁₉O₅F₁₇Si₃ : | 26.24 | 2.77 | 12.24 | 47.08 |
| Found : | 26.25 | 2.78 | 12.23 | 47.09 |

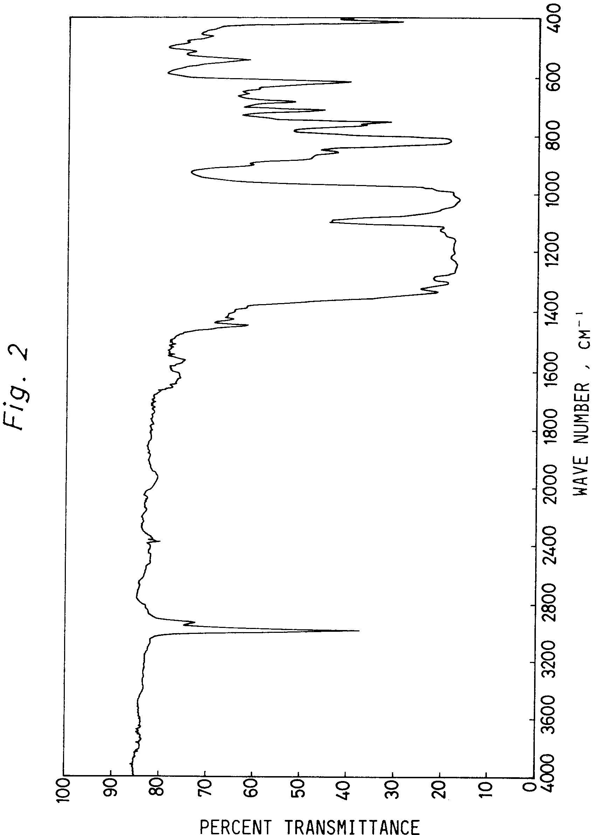

- IR spectrum: : Shown in Figure 2.
- Si-O: : 1020 cm⁻¹
- C-F: : 1000-1400 cm⁻¹

¹H-NMR spectrum: in flon-113, internal standard CHCl₃

| | δ (ppm) |
|---|---|
| (m, 2H, Si-CH₂-C) | 0.40-0.88 |
| (m, 2H, CF-CH₂-C) | 1.72-2.45 |

From these results, the distillate obtained was ascertained to be an organosilicon compound having the following chemical formula:

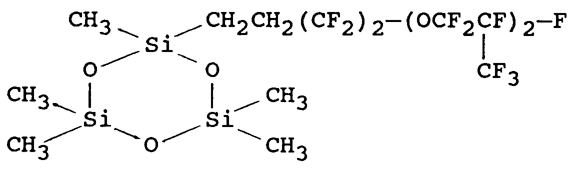

### Example 2

(1) In basically the same manner as in Example 1 (1) above, a fluorine-containing organohalosilane having the following formula (9): 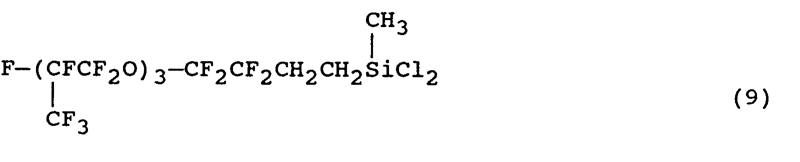 was prepared.
(2) A 2-liter four-necked flask was charged with 500 ml of m-xylene hexafluoride, into which 33 g of triethylamine was dissolved. The flask was equipped with two 500-ml dropping funnels. One of the dropping funnels was charged with a solution containing 190 g of the fluorine-containing organohalosilane of the above formula (9) in 100 ml of m-xylene hexafluoride. The other dropping funnel was charged with a solution containing 42 g of the same disiloxanediol as that used in Example 1 in 150 ml of methyl ethyl ketone.

After the triethylamine solution in the flask was heated to 50°C, the fluorine-containing organohalosilane solution and the disiloxanediol solution were added dropwise from the dropping funnels to the triethylamine solution at substantially equal rates of about 1 ml/min. After the dropping was over, the resulting reaction mixture was stirred for 30 minutes, and then washed with water to remove by-produced triethylamine hydrochloride. After the washing, the organic layer was separated from the rest and distilled, to give 181 g of a distillate at 117°C and 3 mmHg (Yield: 83%).

The distillate thus obtained was subjected to elemental analysis as well as infrared absorption and NMR spectroscopic analyses. The results are given below.

| Elemental analysis: | | | | |
|---|---|---|---|---|
| | C | H | Si | F |
| Calcd. for C₁₈H₁₉O₆F₂₃Si₃ : | 25.35 | 2.23 | 9.86 | 51.29 |
| Found : | 25.34 | 2.19 | 9.85 | 51.33 |

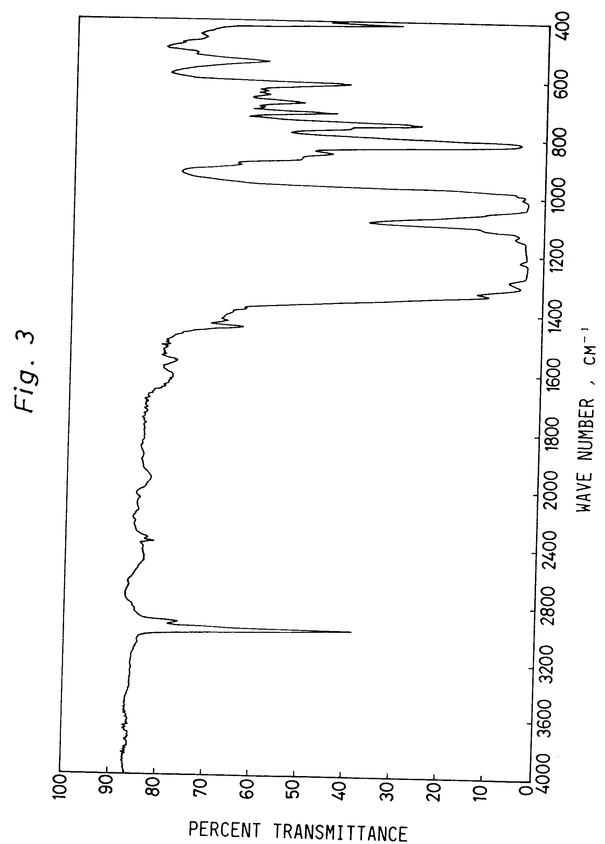

- IR spectrum: : Shown in Figure 3.
- Si-O: : 1020 cm⁻¹
- C-F: : 1000-1400 cm¹

¹H-NMR spectrum: in flon-113, internal standard CHCl₃

| | δ(ppm) |
|---|---|
| (m, 2H, Si-CH₂-C) | 0.40-0.97 |
| (m, 2H, CF-CH₂-C) | 1.73-2.43 |

From these results, the distillate obtained was ascertained to be an organosilicon compound having the following chemical formula:

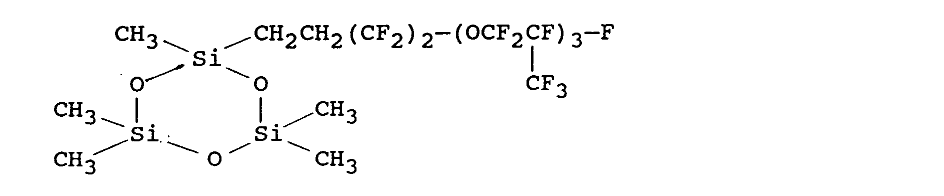

## Claims

1. A fluorine-containing cyclotrisiloxane having the following general formula (1): 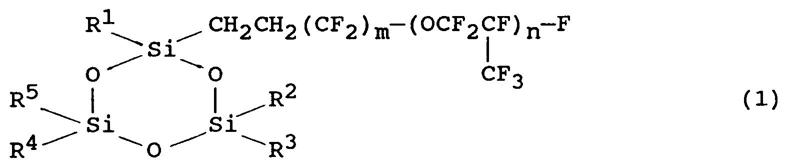 wherein R¹, R², R³, R⁴ and R⁵ may be the same or different from each other and are each an alkyl group of from 1 to 6 carbon atoms, m is an integer from 2 to 8, and n is an integer from 1 to 7.

2. The fluorine-containing cyclotrisiloxane according to claim 1, wherein in the above general formula (1) all of R¹ to R⁵ are methyl.

3. A process for preparing the fluorine-containing cyclotrisiloxane of claim 1, comprising reacting a disiloxanediol having the following general formula (2): 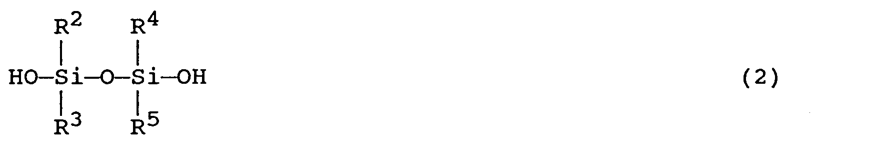 wherein R², R³, R⁴ and R⁵ may be the same or different from each other and are each an alkyl group of from 1 to 6 carbon atoms, with a fluorine-containing organohalosilane having the following general formula (3): 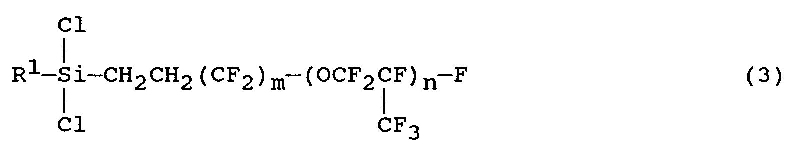 wherein R¹ is an alkyl group of from 1 to 6 carbon atoms, m is an integer from 2 to 8, and n is an integer from 1 to 7.

4. The process according to claim 3, wherein the reaction is carried out in the presence of an amine compound as a catalyst.

5. The process according to claim 4, wherein the amine compound comprises triethylamine.
